# EUROPEAN PATENT SPECIFICATION

(11) **EP 3 925 051 B1**
(45) Date of publication and mention of the grant of the patent: **17.04.2024**
(21) Application number: 20720924.8
(22) Date of filing: 19.03.2020
(51) Int. Cl.: H02J 3/38, H02J 1/10, H02M 3/156

(54) **DEVICE FOR COUPLING A SOLAR PANEL TO AN INVERTER AND A SYSTEM FORMED THEREBY**
VORRICHTUNG ZUR KOPPLUNG EINES SOLARPANEELS MIT EINEM WECHSELRICHTER UND SO HERGESTELLTES SYSTEM
DISPOSITIF DESTINÉ À COUPLER UN PANNEAU SOLAIRE À UN ONDULEUR ET SYSTÈME AINSI FORMÉ

(30) Priority: 05.08.2019 HU 1900275
(43) Date of publication of application: 22.12.2021
(73) Proprietor: Jüllich, Márk József, Székesfehérvár 8000 (HU)
(72) Inventor: CSÍK, Roland, 8042 Moha (HU)
(74) Representative: Danubia Patent & Law Office LLC
(86) International application number: PCT/HU2020/050009
(87) International publication number: WO 2021/024003

(56) References cited:
- EP-A2- 2 135 348
- EP-B1- 2 135 348
- CN-A- 107 968 565
- US-A1- 2011 285 375
- US-A1- 2013 307 342
- US-A1- 2014 319 918
- US-A1- 2015 009 733

## Description

The invention relates to a system for connecting a plurality of solar panels to a common DC-AC inverter, wherein the device has input ports connected to the two outputs of the associated solar panel or panels, and has two output ports delivering an increased DC voltage compared to the voltage coupled to the input ports.

Different types of systems have been developed generating energy from solar panels and can be obtained in commerce. Concerning their designs, they can operate with the public energy lines or they can be designed as an isle-like operation. The systems designed for isle use are not connected to the mains line and can be used for supplying energy to the local users only. The systems connected to the mains line or grids are appropriately synchronized therewith, and the grid takes the generated energy, and an appropriate calculation will be made with the local owner concerning the recuperated energy.

At the site of installation generally a plurality of solar panels is used, and the outputs of the solar panels are connected in series with each other (depending on the number of the solar panels) so that during a solar irradiation required for the generation of energy their combined output voltage can reach a threshold voltage e.g., 225 V. In systems designed for generating higher powers several ones of such arrangements are connected in parallel. The output ports of the serially connected solar panels are coupled to the inputs of a suitably designed inverter, and the inverter converts the energy generated by the solar panels into an AC voltage which is available at the site concerned. In case of isle design the output can even be a direct current voltage.

A property of the inverters is that they start operation only if a minimum input voltage is received, and if the solar panel arrangement receives a stronger solar irradiation, then the input voltage can be even the twice of the minimum threshold voltage.

According to established installation practice the series arrangement of solar panels is directly coupled to the inverter, i.e., no kind of electronic devices is connected between the solar panels and the inverter. In connection with solar panel system high number of information is available, of which one can mention e.g., the detailed description published at the site https://eonsh.hu/.

The energy generated by solar panels is highly dependent on the intensity of the irradiation, on the angle of incidence of the rays and on the size of area the irradiation reaches the panels. In cloudy weather or when certain cells of the arrangement are in shadow, but others are under sunshine at the output of the serially connected solar panels the threshold voltage will not yet appear at which the connected inverter could start operation and delivers power at its output. As the result of experiments carried out with solar panels and according to established practice a position has been formed according to which for the suitable energy generation at least as intensive irradiation is required at which the combined voltage on the solar panels arrangement reaches a threshold voltage which is e.g., 225 V. The inverters are accordingly designed so that they start operation at such an input threshold voltage and in case of input voltages below that level they do not generate energy.

Apart from that situation it is also known that the efficiency of solar panels increases if the load is not even and there are load intervals.

US2011/0285375 relates to a maximum power point tracker bypass circuit which tries to adjust the supply from PV panels to their maximum operational condition to be able to provide the maximum power. The circuits comprise a DC-DC converter that can be a boost converter or buck bust converter and a bypass circuit that bypass the whole arrangement if conditions are not close to the optimum. A specialty of the system is that the circuits are using a DC source that supplies the required energy even if the associated PV panel is not generating energy or the energy output is small.

A further specialty lies in that the circuit represent a load and their presence is not required if bypass conditions are set.

The use of such circuits cannot solve the problem mentioned earlier, namely, to utilize the energy of the sufficiently energized panels in case when other panels are in shadow or cannot supply the required minimum voltage.

The basic task of the present invention lies in that in cases when individual cells of the solar panel arrangement are still in shadow or do not obtain sufficient energy to provide the minimum threshold voltage for the DC-AC converter, but at other panels and cells there is a sufficient amount of charge carriers to generate energy, then this useful energy should be utilized also in the reality even if the added voltage of the panel arrangement does not reach yet the threshold voltage of the inverter to which the panes are coupled.

For solving this task, a further property is utilized, namely, in case of serially connected cells if certain cells are in shadow or do not receive sufficiently intensive irradiation then at the same time between its connection ports a very small electrical resistance can be measured, i.e., they have a high conductance. In view of this fact and because the cells are connected in series with each other within a panel, then the voltage generated by the cells receiving sufficient irradiation will become added, and from the panel one can take sufficient or at least a non-negligibly low amount of energy even if the voltage is still low being e.g. 5V. Because inverters do not function if their input voltage is under the threshold voltage, in case of conventional solutions such otherwise utilizable energy gets lost.

The task is therefore to provide a device which can be connected between the solar panels and the inverter and makes possible the utilization of the otherwise lost energy.

A further task of the invention is to provide a system capable of interconnecting a high number of solar panels and devices and to connect them to the inverter or inverters.

For solving this task it has been recognized that with the outputs of serially connected solar panels respective voltage increasing pulse controlled devices have to be inserted which, concerning their type, belong to the family of known DC-DC converters in which they convert the energy appearing at their inputs to DC output energy with higher voltage, and the outputs of such devices should be connected in series with each other, and the inverter can be coupled to the output of such a series chain.

In case of the availability of a greater size solar panel farm then from the point of view of decreasing costs it could be sufficient to connect such a device to the series chain of such solar panels which should now be dimensioned to the higher added voltage and in case a high number of such arrangements are available, these can be connected in parallel and/or in series and parallel with each other and coupled to the inputs of one or more inverter.

According to the invention a system has been provided for coupling a solar panel or panels to an inverter, which is made and configured as defined in the attached claims.

The system according to the invention will now be described in connection with exemplary embodiments thereof, wherein reference will be made to the accompanying drawings. In the drawing:
Fig. 1 the sketch of the arrangement required for using the device according to the invention;
Fig. 2 is a sketch of an arrangement similar to that shown in Fig. 1 used in case of several lines of solar panels;
Fig. 3 is a simplified functional block and circuit diagram of of the device according to the invention;
Fig. 4 shows the arrangement of the central part of a common system; and
Fig. 5 shows a detail a device that can be controlled together with other devices indicating the changes with respect to Fig. 3.

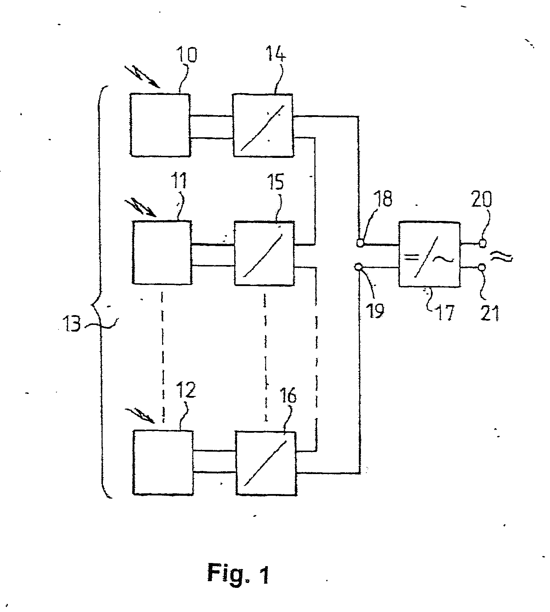

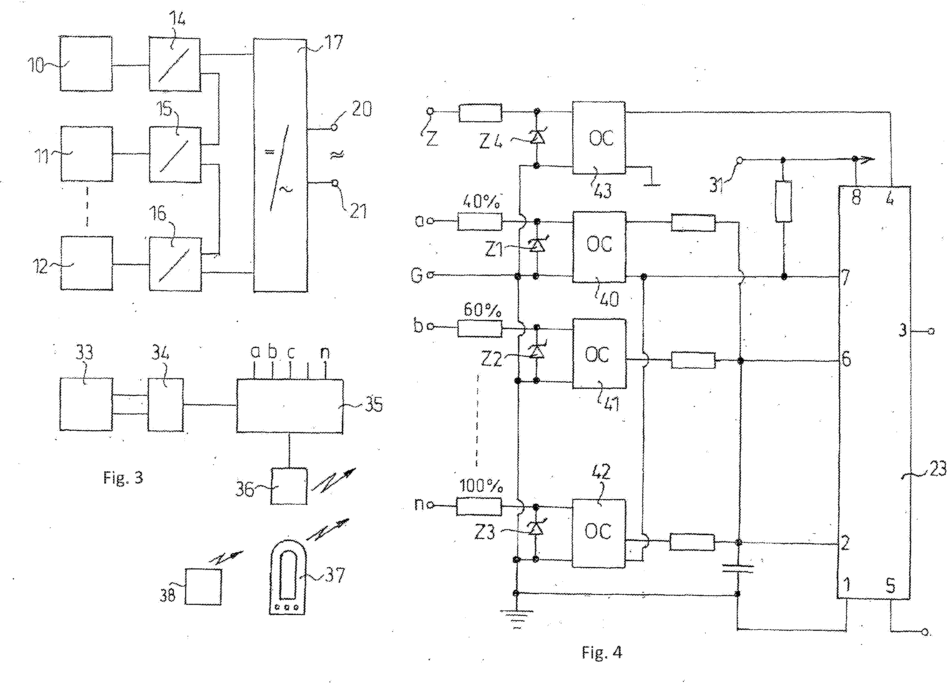

In Fig. 1 a solar panel arrangement 13 has been shown that comprises a plurality of solar panels 10, 11, 12 of which the first two solar panels 10, 11 and the last solar panel 13 of the panel arrangement have been drawn. In accordance with local conditions in the panel arrangement 13 at least four but any higher number of solar panels can be used which are connected in a common system and they are arranged preferably on the roof of a building (e.g., family house) beside each other or in separate groups. Each of the solar panels 10-12 has a respective pair of outputs which are coupled to an associated one of a device 14, 15 and 16 made according to the present invention. The respective devices 14-16 have identical structures shown in Fig. 3 in detail, and their outputs are connected in series with each other and coupled to input ports 18, 19 of an inverter 17 associated with the so established arrangement. The inverter 17 has a conventional design and output ports 20, 21 thereof of connected to the electrical mains at the size of use when the inverter 17 is designed to provide a supply to the AC mains. The connection takes place through appropriate fuses and consumption meter(s). In case of an isle arrangement the output ports 20, 21 of the inverter 17 ensure local electrical energy supply. In case the devices 14 to 16 according to the invention were not used, then the outputs of the respective solar panels 10 - 12 would also be connected in a series connection to the input of the common inverter 17. The design of the inverters 17 requires a minimum input threshold voltage for the start of operation. This minimum voltage threshold depends on the number of solar panels used, on the purpose of use and on several other conditions.

Each of the devices 14 to 16 has the same structure and they are designed so that when the output voltage of the associated and connected solar panel reaches a minimum threshold value e.g., 5 V then it starts functioning, and on its output an adjustable voltage typically between about 30 and 90 V is provided. According to their functional type, the devices 14 to 16 made according to the invention are DC - Dc converters.

Fig. 1 shows only a preferred example for the application of the devices 14 to 16. In this arrangement as many solar panels and associated devices can be connected in series with each other, wherein the sum of the output voltages of the devices falls in the operational input voltage range of the inverter 17 (e.g., between 200V to 500V). In case at the site of installment more solar panels are available, then beside the panel arrangement 13 shown in Fig. 1 one or more similar panel arrangements can be provided, and their output ports can be connected in parallel with each other and to the input ports 18, 19 of the inverter 17.

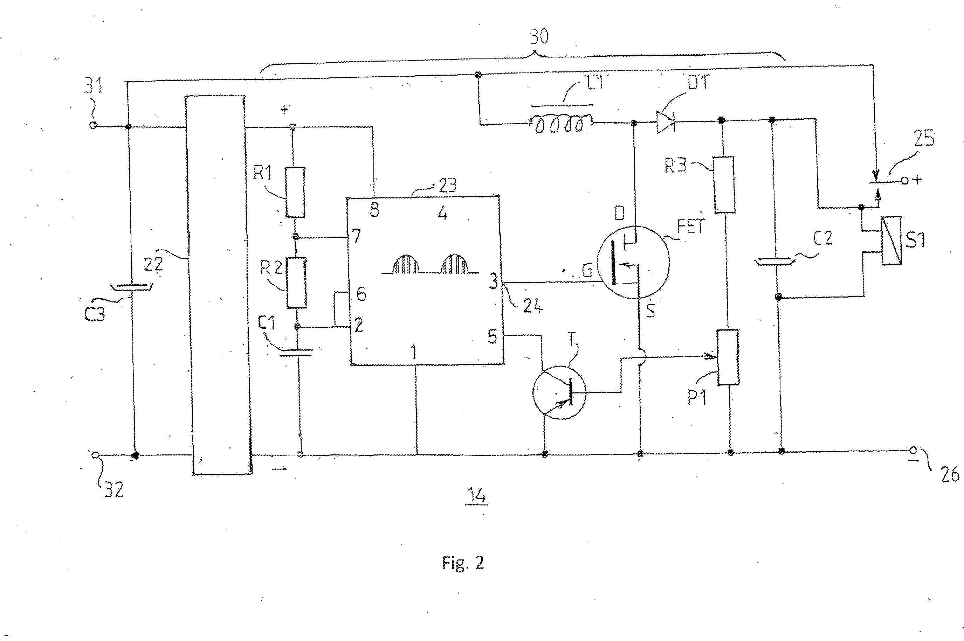

In case of greater solar panel sites, i.e. at so called solar panel farms the arrangement shown in Fig. 2 can be greater sites for solar panels and for the sake of sparing costs not every solar panel can be associated with a respective one of the devices according to the invention but several solar panels can be connected in series with each other and can be coupled to a single modified one of the devices 14', 15' and 16' according to the invention. The difference lies here in that the modified devices 14', 15' and 16' are designed so that their output voltages fall in the input voltage range of the inverter 17, and their smallest input voltage is n x Vₘᵢₙ, wherein Vₘᵢₙ designates the minimum voltage of a solar panel at which the solar panel can already be loaded, and n designates the number of the serially connected solar panels. In Fig. 2 the first, second and last solar panels 10, 11, 12; 10a, 11a 12a; and 10c, 11c, 12c have been shown as well as the modified devices 14', 15' and 16'. The drawback of the arrangement shown in Fig. 2 lies in that not all solar panels are associated with a respective one of the device, but if the user has sufficient funds to cover the increased costs, it can be worthwhile to use several ones of the arrangements shown in Fig 1 and connect them in parallel.

Reference is made now to Fig. 3 that shows an example for the internal design of one of the devices 14, 15, 16, e.g., that coupled to the solar panel 10. The positive and negative outputs of the solar panel 10 are coupled to input ports 31, 32 of the device 14 of which port 31 is positive and port 32 is negative that represents in Fig. 3 the ground potential. The input ports 31 and32 are coupled to inputs of a controlled DC converter 22 (DC-DC converter) providing a stabilized DC output voltage that generates the supply voltage required for the circuits of the device 14 and its output voltage is typically around 5Vbut it can be realized also for supplying 12 V if the circuits need that voltage. The controlled DC converter 22 is a known component and can be obtained in commerce, e.g. such can be the integrated circuit L7815 1A available from several manufacturers and its data sheet can be found at the web address http://html.alldatasheet.com /html-df/22640/STMICROELECTRONICS/L781151ACV/1621/1/L781151ACV.html. The input voltage of the controlled DC converter 22 can change between about 5V and 32V and provides a stabilized voltage at its output. The supply of the device 14 will remain possible if different intensity of sun irradiation will reach the solar panel and during such changing irradiation the input voltage of the converter 22 changes within wide limits (of course, then also the loadability of the supplying solar panel will change) because during such changes a stabilized voltage of e.g., 5 V will always be available. Between the positive and negative output branches of the converter 22 there is a series member including resistors R1, R2 and a capacitor C1.

The basic unit of the device 14 is constituted by a signal (or pulse) generator 23 built by an integrated circuit which has a per se known structure. In Fig. 3 the ports of the signal generator 23 have been indicated by numbers 1 to 8. Of them port 1 is the grounded negative branch of the supply voltage, ports 2 and 6 are inputs and define the frequency of the generated dense pulses and they are responsive to the received voltage. Port 3 is the output of the pulses and port 4 is the reset port which stops the generator function when being controlled, port 5 is the feedback port required for the stabilization of the output signals. Finally port 8 should receive the positive branch of the supply voltage.

The signal generator 23 is designed in such a way that depending on its control and adjustment it provides at its output port 24 output pulses having a frequency between about 30 and 80 kHz.

To the positive port 31 coming from the solar panel 10 (preferably through a fuse not shown in the drawing) an inductance L1 is connected, and between the remote end of the inductance L1 and the negative branch of the supply voltage drain electrode D and source electrode S of a field effect transistor FET are connected. Between the positive and negative ports 31 and 32 a high capacitance electrolyte capacitor C3 is connected which receives the current arriving from the solar panel gets charged during pulse intervals.

To the remote end of the inductance L1 through a protection diode D1 open in the direction of passage of the current we arrive to working contact of relay S1. The task of the relay S1 is to put the device 14 aside in cases when the associated solar panel is in full shadow and cannot generate sufficient voltage for the operation of the device. In such a state i.e., in the rest condition of the relay S1 the positive input port 31 is coupled through the home contact of the relay S1 directly to positive output port 25 of the device 14, and in that case the positive output port 25 and negative output port 26 of the device 14 are connected directly to output ports of the associated supplying solar panel 10. Because in non-illuminated state the electrical resistance of solar panels is low, the path of the current flowing through the arrangement 13 consisting of a plurality of solar panels if one (or more) panel is in shadow. This is true, because if the other solar panels generate power, then in the base state of the relay S1 the current generated by the other functioning members of the series arrangement will flow through this non-generating solar panel in shadow and the current path will not be broken. As soon as the earlier non-illuminated solar panel receives irradiation, then it starts functioning and the relay S1 will get into pulled or working state and its working contact i.e., the cathode of the diode D1 will be coupled to the positive output port 25.

Between this common point i.e., the cathode of the diode D1 and the negative output port 26 a series member is inserted that comprises a series resistor R3 and potentiometer P1 and in parallel therewith a high capacitance electrolyte capacitor C2 is also connected. The sliding contact of the potentiometer P1 is coupled to base of a transistor T, which has a collector connected to control input port 5 of the signal generator 23. On the output port 3 of the signal generator 23 dense pulses will appear if normal supply voltage is available, and this output port 3 is coupled directly to Gate electrode of the field effect transistor FET.

In the device 14 designed the described way the voltage-controlled signal generator 23 starts operation when the DC converter 22 supplies at its outputs the DC voltage required for its operation. When the supply voltage appears, a positive voltage will be present on the output port 3 of the signal generator 23 i.e., on its output 24 and on the gate G of the field effect transistor FET. Under this effect the field effect transistor will open, and the full voltage will be switched on the inductance L1 and in this a high current starts to flow. This state of the signal generator 23 will be changed after a period time has elapsed that depends on the voltage supplied to the control input port 6, whereby the voltage at the output 24 will decrease to zero and so does the voltage on the gate electrode G and the conductive state of the field effect transistor FET disappears the transistor gets closed. Thereby the connection between the common point of the inductance L1 and the diode D1 towards the negative branch of the supply voltage gets broken. It is a known fact that if current flows through and inductance and its path is broken then there will be a voltage jump across the inductance and the current does not get broken. In the present case the current will flow through the diode D1 and will charge the high-capacity electrolyte capacitor C2 and this also enables current flow towards the load. After the period break this process gets repeated, and the signal generator periodically opens and closes the field effect transistor FET. By the potentiometer P1 and the transistor T the voltage supplied to the feedback input port 5 can be changed which changes the duty cycle of the dense pulses and thereby the voltage appearing on the capacitor C2 can be controlled. At all position of the potentiometer P1 the output voltage preserves the so adjusted value. It should be noted that the adjustment range available by the potentiometer P1 is limited and further adjustment possibilities can be obtained by changing the voltage applied to the control input port 6 of the signal generator 23.

The diode D1 prevents the discharging of the capacitor C2 when the end of the inductance L1 close to the output is substantially on the potential of the negative branch and thereby prevents the loss of the energy stored in this capacitor.

It is noted that the here described embodiment of the device 14 is only a possible example and this function can be realized in several versions. This embodiment is preferred just because of its simple design and the minimum number of components used.

In a preferred embodiment the parameters of the device 14 are as follows:
Input voltage range: 5V - 32V
Output voltage: 33V - 325V DC and the stabilized internal power supply of 5V
Output current: 0 - 10A,
Efficiency: at least 90%, maximum 95%.

When the summarized output voltage of the serially connected devices 14, 15.16 reach the threshold voltage required for the operation of the inverter 17, this latter will start functioning and provides energy that can be utilized.

The above-described circuits constituting the device 14 realize a pulse-controlled DC - DC converter between the positive and negative output ports 25, 26 which generates from the DC voltage coupled to its inputs a substantially higher and stable DC output voltage. The respective relays S1 provided in the devices ensure that circuit breaks cannot occur in the series arrangement.

It can be understood that the device 14 according to the invention utilizes all available energy generated in the solar panel connected to it, which the conventional inverters would be unable to utilize because in case the devices 14..16 according to the invention were not coupled to the respective solar panels and when the available voltage on the series chain of the solar panels 10 - 12 would not reach the threshold voltage at which the inverter17 starts operation, no utilization can take place. Conversely when the devices 14 to16 are coupled to the associated solar panels 10 - 12 and in the series arrangement an increased voltage appears at the input of the inverter 17, the inverter 17 can start its function and can generate and provide valuable energy to the consumers. Such a (partially covered or shadowed) situation is often experienced under the temperate zone because solar panels that can follow the solar path are expensive and, in most locations solar panels are installed that have fixed position. Such situation appears twice a day with certainty (in the morning and in the afternoon). Furthermore, clouds have irregular movements that cannot be foreseen or local shadow effects (e.g., branches of trees) can provide local shadow even for individual cells when other cells still receive irradiation with sufficient intensity. Besides it is a further advantage that the solar cells receive pulsated load and during the pulse intervals they can slightly cool down which can improve their efficiency.

Reference is made to Fig. 4 which has a close similarity with Fig. 1 but it is provided with units that facilitate ease of use. In any actual installation site, the electrical and electronic units are arranged generally in a separate storage place or cabinet, and this is true for the units shown in Fig. 4 (of course with the exception of the solar panels which are installed in the free space generally on the roof of a house). In this embodiment in addition to the solar panels 10 - 12 a further solar panel 33 is also arranged which can be smaller than the other solar panels and it has the task to generate the power supply required for the operation of the units in the cabinet. To the output of the solar panel 33 preferably an uniterruptible power supply 34 is coupled comprising an appropriately designed rechargeable battery to ensure operation for the central circuits when the solar panel 33 is not irradiated or it is in shadow. The system is provided with a central unit 35 coupled to the respective devices 14 ... 16 and measures the voltage at their characteristic points and stores the allowed input voltage range of the inverter 17. The central unit 35 comprises a suitable memory and a programmed processor to be able to perform the functions and operations disclosed in the following part of the description. Preferably a gsm device 36 is connected to the central unit 35 through which authorized users can control the system by means of their own mobile device 37 and/or tablet or computer 38, or in simpler cases can get orientation concerning the actual status and operational parameters of the system. There are numerous ways how the here described possibilities can be realized, and now only the function will be explained by which the user can adjust and set the optimum operational mode of operation of the signal generator 23. Reference is the made now to Fig. 5 which shows an enlarged version of the arrangement shown in Fig. 3, and here only the respective ports and those circuits of the signal generator 23 have been shown which were not illustrated in Fig. 3.

The need and possibility for this addition is coming from the fact that at the given place of installation different number of solar panels can be used and the resulting added output voltage can be different, and the input voltage range of the actually used inverters 17 can also be different, and finally depending on the conditions at the site of the installation different amounts of solar energy can reach the respective solar panels.

The ports 2 and 6 of the integrated circuit that constitutes the signal generator 23 are preferably interconnected and the voltage applied here determines the frequency and on-off ratio of the generated dense pulses. The smallest frequency can be e.g., 33 kHz and at the highest voltage the frequency will be close to 80 kHz and the duty cycle can reach even 90%, Depending on the choosing of if the circuit components the highest frequency could even reach 2 MHz.

It can be seen in Fig. 5 that to the interconnected ports 2 and 6 the outputs of a plurality of optical couplers 40, 41 and 42 are connected trough respective resistors and substantially in parallel to each other, and the number of the optical couplers can be as high as 4 to 6 depending on the properties of the system and on the user's requirements. The other outputs of all optical couplers 40, 41 and 42 are connected to the port 7 of the signal generator 23. The output voltage of the optical couplers provides a control between ports 7 and 6 of the signal generator 23. One input of all optical couplers is connected to the ground point G of the central unit 35 and their other inputs are connected through a respective resistor to input points a, b,...n which are connected to similarly named ports a, b, ... n in the central unit 35 shown in Fig. 4. Between the respective common points of the resistors and the inputs of the associated optical couplers and the ground point Z a respective Zener diode Z1, Z2 Z3 is connected. These Zener diodes have stepwise increasing cut-off voltages, and the small steps follow each other in the voltage range of about 3.5V - 5.6V. The task of the respective Zener diodes lies in to limit the voltage connected to the input port 6 to their respective cut off voltage in case the voltage coupled to the other end of the associated resistor would be too high. Thereby the output power can be controlled or in given cases can be limited. The extent of the control can be adjusted by selecting proper Zener diodes and optical couplers to change in discrete steps from 40% to 100%.

The central unit 35 is taught to know the parameters of the arrangement and knows what parameters are required by the device 14 to generate a voltage range corresponding to the actual level of irradiation, and automatically selects the appropriate one out of the input points a, b, ... n by applying voltage to that input point only. This voltage is proportional to the voltage that controls the input of the inverter 17 (supposing a substantial extent of voltage attenuation with upper limitation).

In Fig, 5 a further optical coupler 43 can be observed which has an entirely different task and its output is coupled to the reset port 4 of the integrated circuit forming the signal generator 23. The maximum voltage is defined here also by a Zener diode Z4. If the optical coupler 43 receives an appropriate input voltage, then it stops the operation of the signal generator 23 that will not generate any output signal. In that case all the devices 14 ... 16 take their basic states when the inputs of the inverter 17 will receive the sum of the voltages of the respective solar panels 10 ... 12 as if the devices 14 to 16 and the arrangement did not exist. This state is ensured by the relays included in the respective devices a described earlier. The adjustment of this status is required e.g., if the user cannot verify his authorization and wishes to enter the system without permission.

The use of the optical couplers is required because the respective devices 14 ...16 are connected in series with each other and the zero potential of each of them has a different potential relative to the ground potential, therefore a separation was required which is independent from the round potential, and such separation can be realized in the best and cheapest way by means of optical couplers.

The user of the system, if he has an appropriate application program then by means of his mobile device 37 or tablet or personal computer 38 can check the actual status of the system and of its respective units and can adjust the average input voltage to be sent to the inverter 17. Without having an access code then the system gets blocked and the advantages what the present invention can provide will not appear. It is also possible that a user includes in a contract the extent how much out of the advantages of the present invention he wishes to utilize, and for his use only to those of the optical couplers 40...42 will be provided access that corresponds to the condition defined in the user's contract. From the point of view of manufacturing costs there is no real difference between the hardware costs providing different levels of service, and it is the most preferred to build the system with a hardware capable of providing all levels of use, and its performance can be limited to correspond to the needs (or budgets) of the different users.

In the practice by using the solution according to the invention the same solar panel arrangement can be capable of generating by 20 % to 100% more energy. The increase in efficiency will appear in the most significant way where owing to local limitations there is no possibility to install optimum number or place of the solar panels. As a consequence of the increased efficiency in certain places it is sufficient to install only ½, 2/3 or % part of the solar panels relative to the number calculated by conventional methods. This is a substantial advantage because the user needs to invest in addition to the cost of the solar panels and the associated circuits but also to the local installation costs which latter can be substantially higher than the hardware costs.

## Claims

1. System for connecting a plurality of solar panels (10, 11, 12) to a common DC-AC inverter (17), wherein the common DC-AC inverter (17) has an allowed input voltage range with a minimum input voltage for starting operation, the system comprising
- voltage booster devices (14, 15, 16) each coupled to outputs of an associated solar panel (10, 11, 12),
- said voltage booster devices (14, 15, 16) each have a first output port (25) and a second output port (26) and comprises a voltage booster DC-DC converter (30), wherein
- the voltage booster DC-DC converter (30) comprises an adjustable signal generator (23) built as an integrated circuit;
- said adjustable signal generator (23) has a signal output port (3), a power supply port (8), a ground port (1), at least one control input port (6, 7) and a feedback port (5),
- the voltage booster DC-DC converter (30) further comprises an inductance (L1), a controlled power switch having two terminals and consisting of a field effect transistor (FET), a diode (D1), an electrolytic capacitor (C2), and a voltage divider having a potentiometer (P1) with a sliding contact;
- said inductance (L1) has a first end coupled to a first output of the associated solar panel (10, 11, 12),
- a second end of the inductance (L1) is connected to one terminal of the controlled power switch,
- the ground port (1) is coupled to a second output of the associated solar panel (10, 11, 12), to the other terminal of the controlled power switch, to an end of the voltage divider and to the second output port (26);
- the second end of the inductance (L1) is coupled through a serially connected diode (D1) to one terminal of the electrolytic capacitor (C2), to the other end of the voltage divider, the electrolytic capacitor (C2) having a second terminal connected to said ground port (1)
- the controlled power switch has a control or gate electrode (G) connected to the signal output port (3) of the adjustable signal generator (23), and the sliding contact of the potentiometer (P1) is coupled through a transistor (T) to said feedback port (5) of the adjustable signal generator (23), **characterized in that**
- each of said voltage booster devices (14, 15, 16) comprises a voltage stabilizing DC-DC converter (22) providing a stabilized output voltage and having a predetermined input voltage range, and the voltage stabilizing DC-DC converter (22) comprises inputs that are configured to be connected to the outputs of the associated solar panel (10, 11, 12), and
- the stabilized DC output of the DC-DC converter (22) is configured to be coupled to said power supply port (8) of the adjustable signal generator (23) in the associated voltage booster device (14, 15, 16),
- each voltage booster device (14, 15, 16) further comprises a relay (S1) that has three contacts, a central contact connected to said first output port (25) of the respective voltage booster device (14, 15, 16), a working contact connected to the common point of connection of the diode (D1) and the electrolytic capacitor (C2), said working contact is configured to be connected to said central contact when the relay (S1) is energized, and a home contact coupled to the first output of the associated solar panel (10, 11, 12) said home contact is configured to be connected with said central contact when the relay (S1) is in off state, wherein the relay (S1) is configured to get into pulled or working state as soon as the associated non-illuminated solar panel receives irradiation, and
- the first and second output ports (25, 26) of the voltage booster devices (14, 15, 16) are connected in series and are configured to provide at least said minimum input voltage DC supply to said common DC-AC inverter (17).

2. The system as claimed in claim 1, **wherein** the adjustable signal generator (23) has a reset port (4), and the adjustable signal generator (23) is configured to change the frequency and/or the duty cycle of the generated pulses by applying a control voltage to said control input port (6, 7).

3. The system as claimed in claim 2, **wherein** the system further comprises a central unit (35) comprising a memory and a programmed processor, and optical couplers (40, 41, 42) with a respective input and outputs, the central unit (35) has respective voltage control outputs (a, b,...n) coupled to the input of said optical couplers (40, 41, 42) and to the ground (G), and between the input of each optical coupler (40, 41; 42) and the ground (G) a respective voltage divider is connected, wherein each voltage divider includes a resistor and a serially connected Zener diode (Z1, Z2, Z3),
- the outputs of the optical couplers (40, 41, 42) are connected to said control input port (6) and inner ground port (1) of an associated one of said adjustable signal generator (23) in said voltage booster devices (14, 15, 16), wherein the cut off voltage of said Zener diodes (Z1, Z2, Z3) are configured to limit the adjustable highest frequency of the associated adjustable signal generator (23), and the Zener diodes (Z1, Z2, Z3) associated with a voltage booster device (14, 15, 16) have stepwise differing cutoff voltages, and the central unit (35) is configured to define which one of the control outputs (a, b, c...n) is energized to define thereby the maximum frequency of the pulses of the associated voltage booster device (14, 15, 16).

4. The system as claimed in claim 3, **wherein** it further comprises a further optical coupler (43) with an output connected to the reset port (4) of the adjustable signal generator (23) in said voltage booster devices (14, 15, 16), said further optical coupler (43) has an input connected to said central unit (35) which is configured to stop the operation of the associated adjustable signal generator (23) and to terminate energizing said associated relay (S1) when certain users' conditions apply.

5. The system as claimed in claim 4, **wherein** the system comprises a gsrr communication device (36) connected to the central unit (35), and said gsrr communication device (36) is configured to be in connection with a mobile phone (37), and/or a computer (38) or a tablet and configured to enable for a user following the use of a suitable application program and identity check the inspection and/or control of the system.

## Patentansprüche

1. System zum Verbinden einer Vielzahl von Sonnenkollektoren (10, 11, 12) mit einem gemeinsamen DC-AC-Wechselrichter (17), wobei der gemeinsame DC-AC-Wechselrichter (17) einen zulässigen Eingangsspannungsbereich mit einer minimalen Eingangsspannung für den Startbetrieb aufweist, wobei das System Folgendes umfasst
- Spannungserhöhungsvorrichtungen (14, 15, 16), die jeweils mit den Ausgängen eines zugehörigen Solarpanels (10, 11, 12) verbunden sind,
- wobei die Spannungserhöhungsvorrichtungen (14, 15, 16) jeweils einen ersten Ausgangsanschluss (25) und einen zweiten Ausgangsanschluss (26) aufweisen und einen Spannungserhöhungs-DC-DC-Wandler (30) umfassen, wobei
- der Spannungserhöhungs-DC-DC-Wandler (30) einen einstellbaren Signalgenerator (23) in Form einer integrierten Schaltung umfasst;
- der einstellbare Signalgenerator (23) weist einen Signalausgangsanschluss (3), einen Stromversorgungsanschluss (8), einen Masseanschluss (1), mindestens einen Steuereingangsanschluss (6, 7) und einen Rückkopplungsanschluss (5) auf,
- der Spannungserhöhungs-DC-DC-Wandler (30) umfasst ferner eine Induktivität (L1), einen gesteuerten Leistungsschalter mit zwei Anschlüssen, der aus einem Feldeffekttransistor (FET) besteht, eine Diode (D1), einen Elektrolytkondensator (C2) und einen Spannungsteiler mit einem Potentiometer (P1) mit Schleifkontakt;
- die Induktivität (L1) weist ein erstes Ende auf, das mit einem ersten Ausgang des zugehörigen Solarpanels (10, 11, 12) gekoppelt ist,
- und ein zweites Ende der Induktivität (L1) ist mit einem Anschluss des gesteuerten Leistungsschalters verbunden,
- der Masseanschluss (1) ist mit einem zweiten Ausgang des zugehörigen Solarpanels (10, 11, 12), mit dem anderen Anschluss des gesteuerten Leistungsschalters, mit einem Ende des Spannungsteilers und mit dem zweiten Ausgangsanschluss (26) gekoppelt;
- das zweite Ende der Induktivität (L1) ist über eine in Reihe geschaltete Diode (D1) mit einem Anschluss des Elektrolytkondensators (C2) an das andere Ende des Spannungsteilers gekoppelt, wobei der Elektrolytkondensator (C2) einen zweiten Anschluss aufweist, der mit dem Masseanschluss (1) verbunden ist,
- der gesteuerte Leistungsschalter weist eine Steuer- oder Gate-Elektrode (G) auf, die mit dem Signalausgangsanschluss (3) des einstellbaren Signalgenerators (23) verbunden ist, und der Schleifkontakt des Potentiometers (P1) ist über einen Transistor (T) mit dem Rückkopplungsanschluss (5) des einstellbaren Signalgenerators (23) gekoppelt, **dadurch gekennzeichnet, dass**
- jede der Spannungserhöhungsvorrichtungen (14, 15, 16) einen spannungsstabilisierenden DC-DC-Wandler (22) umfasst, der eine stabilisierte Ausgangsspannung bereitstellt und einen vorbestimmten Eingangsspannungsbereich aufweist, und der spannungsstabilisierende DC-DC-Wandler (22) Eingänge umfasst, die so eingerichtet sind, dass sie mit den Ausgängen des zugehörigen Solarpanels (10, 11, 12) verbunden sind, und
- der stabilisierte DC-Ausgang des DC-DC-Wandlers (22) so eingerichtet ist, dass er mit dem Stromversorgungsanschluss (8) des einstellbaren Signalgenerators (23) in der zugehörigen Spannungserhöhungsvorrichtung (14, 15, 16) gekoppelt ist,
- jede Spannungserhöhungsvorrichtung (14, 15, 16) ferner ein Relais (S1) umfasst, das drei Kontakte aufweist, einen zentralen Kontakt, der mit dem ersten Ausgangsanschluss (25) der jeweiligen Spannungserhöhungsvorrichtung (14, 15, 16) verbunden ist, einen Arbeitskontakt, der mit dem gemeinsamen Verbindungspunkt der Diode (D1) und des Elektrolytkondensators (C2) verbunden ist, wobei der Arbeitskontakt so eingerichtet ist, dass er mit dem zentralen Kontakt verbunden ist, wenn das Relais (S1) energetisiert ist, und einen Ausgangskontakt, der mit dem ersten Ausgang des zugehörigen Solarpanels (10, 11, 12) gekoppelt ist, wobei der Ausgangskontakt so eingerichtet ist, dass er mit dem zentralen Kontakt verbunden ist, wenn sich das Relais (S1) im Aus-Zustand befindet, wobei das Relais (S1) so eingerichtet ist, dass es in den angezogenen Zustand oder den Arbeitszustand übergeht, sobald das zugehörige nicht beleuchtete Solarpanel Einstrahlung erhält, und
- die ersten und zweiten Ausgangsanschlüsse (25, 26) der Spannungserhöhungsvorrichtungen (14, 15, 16) in Reihe geschaltet und so eingerichtet sind, dass sie zumindest die Mindest-Eingangsspannungs-DC-Versorgung an den gemeinsamen DC-AC-Wechselrichter (17) liefern.

2. System nach Anspruch 1, **wobei** der einstellbare Signalgenerator (23) einen Rücksetzanschluss (4) aufweist und der einstellbare Signalgenerator (23) so eingerichtet ist, dass er die Frequenz und/oder das Tastverhältnis der erzeugten Impulse durch Anlegen einer Steuerspannung an den Steuereingangsanschluss (6, 7) ändert.

3. System nach Anspruch 2, **wobei** das System ferner eine Zentraleinheit (35), die einen Speicher und einen programmierten Prozessor umfasst, sowie Optokoppler (40, 41, 42) mit einem jeweiligen Eingang und Ausgängen umfasst, wobei die Zentraleinheit (35) jeweilige Spannungssteuerausgänge (a, b, ...n) aufweist, die mit dem Eingang der Optokoppler (40, 41, 42) und mit der Masse (G) gekoppelt sind, und zwischen dem Eingang jedes Optokopplers (40, 41, 42) und der Masse (G) ein entsprechender Spannungsteiler angeschlossen ist, wobei jeder Spannungsteiler einen Widerstand und eine in Reihe geschaltete Zenerdiode (Z1, Z2, Z3) enthält,
- die Ausgänge der Optokoppler (40, 41, 42) sind mit dem Steuereingangsanschluss (6) und dem inneren Masseanschluss (1) eines zugehörigen einstellbaren Signalgenerators (23) in den Spannungserhöhungsvorrichtungen (14, 15, 16) verbunden, wobei die Abschaltspannung der Zenerdioden (Z1, Z2, Z3) so eingerichtet sind, dass sie die einstellbare Höchstfrequenz des zugehörigen einstellbaren Signalgenerators (23) begrenzen, und die Zenerdioden (Z1, Z2, Z3), die zu einer Spannungserhöhungsvorrichtung (14, 15, 16) gehören, weisen stufenweise unterschiedliche Abschaltspannungen auf, und die Zentraleinheit (35) ist so eingerichtet, dass sie definiert, welcher der Steuerausgänge (a, b, c...n) energetisiert wird, um dadurch die maximale Frequenz der Impulse der zugehörigen Spannungsverstärkungseinrichtung (14, 15, 16) zu definieren.

4. System nach Anspruch 3, **wobei** es ferner einen weiteren Optokoppler (43) umfasst mit einem Ausgang, der mit dem Rücksetzanschluss (4) des einstellbaren Signalgenerators (23) in den Spannungserhöhungsvorrichtungen (14, 15, 16) verbunden ist, wobei der weitere Optokoppler (43) einen Eingang aufweist, der mit der Zentraleinheit (35) verbunden ist, die so eingerichtet ist, dass sie den Betrieb des zugehörigen einstellbaren Signalgenerators (23) stoppt und die Energetisierung des zugehörigen Relais (S1) beendet, wenn bestimmte Benutzerbedingungen gelten.

5. System nach Anspruch 4, **wobei** das System eine GSM-Kommunikationsvorrichtung (36) umfasst, die mit der Zentraleinheit (35) verbunden ist, und die GSM-Kommunikationsvorrichtung (36) so eingerichtet ist, dass sie mit einem Mobiltelefon (37) und/oder einem Computer (38) oder einem Tablet in Verbindung steht und so eingerichtet ist, dass sie einem Benutzer nach der Verwendung eines geeigneten Anwendungsprogramms und einer Identitätsprüfung die Inspektion und/oder Steuerung des Systems ermöglicht.

## Revendications

1. Système de connexion d'une pluralité de panneaux solaires (10, 11, 12) à un onduleur CC-CA commun (17), dans lequel l'onduleur CC-CA commun (17) a une plage de tension d'entrée autorisée avec une tension d'entrée minimale pour le démarrage, le système comprenant
- des dispositifs d'amplification de la tension (14, 15, 16), chacun couplé aux sorties d'un panneau solaire associé (10, 11, 12),
- lesdits dispositifs d'amplification de la tension (14, 15, 16) ont chacun un premier port de sortie (25) et un second port de sortie (26) et comprennent un convertisseur CC-CC d'amplification de la tension (30), dans lequel
- le convertisseur CC-CC d'amplification de la tension (30) comprend un générateur de signal réglable (23) construit sous forme de circuit intégré ;
- ledit générateur de signal réglable (23) possède un port de sortie de signal (3), un port d'alimentation (8), un port de mise à la terre (1), au moins un port d'entrée de commande (6, 7) et un port de rétroaction (5),
- le convertisseur CC-CC d'amplification de la tension (30) comprend en outre une inductance (L1), un commutateur de puissance commandé ayant deux bornes et consistant en un transistor à effet de champ (FET), une diode (D1), un condensateur électrolytique (C2) et un diviseur de tension ayant un potentiomètre (P1) avec un contact coulissant ;
- ladite inductance (L1) présente une première extrémité couplée à une première sortie du panneau solaire associé (10, 11, 12),
- une seconde extrémité de l'inductance (L1) est connectée à une borne du commutateur de puissance commandé,
- le port de mise à la terre (1) est couplé à une seconde sortie du panneau solaire associé (10, 11, 12), à l'autre borne du commutateur de puissance commandé, à une extrémité du diviseur de tension et au second port de sortie (26) ;
- la seconde extrémité de l'inductance (L1) est couplée par l'intermédiaire d'une diode connectée en série (D1) à une borne du condensateur électrolytique (C2), à l'autre extrémité du diviseur de tension, le condensateur électrolytique (C2) ayant une seconde borne connectée audit port de mise à la terre (1),
- le commutateur de puissance commandé a une électrode de commande ou de grille (G) connectée au port de sortie de signal (3) du générateur de signal réglable (23), et le contact coulissant du potentiomètre (P1) est couplé par l'intermédiaire d'un transistor (T) audit port de rétroaction (5) du générateur de signal réglable (23), **caractérisé en ce que**
- chacun desdits dispositifs d'amplification de la tension (14, 15, 16) comprend un convertisseur CC-CC de stabilisation de la tension (22) fournissant une tension de sortie stabilisée et ayant une plage de tension d'entrée prédéterminée, et le convertisseur CC-CC de stabilisation de la tension (22) comprend des entrées qui sont configurées pour être connectées aux sorties du panneau solaire associé (10, 11, 12), et
- la sortie CC stabilisée du convertisseur CC-CC (22) est configurée pour être couplée audit port d'alimentation (8) du générateur de signal réglable (23) dans le dispositif d'amplification de la tension associé (14, 15, 16),
- chaque dispositif d'amplification de la tension (14, 15, 16) comprend en outre un relais (S1) à trois contacts, un contact central connecté audit premier port de sortie (25) du dispositif d'amplification de la tension respectif (14, 15, 16), un contact de travail connecté au point commun de connexion de la diode (D1) et du condensateur électrolytique (C2), ledit contact de travail est configuré pour être connecté audit contact central lorsque le relais (S1) est alimenté, et un contact domestique couplé à la première sortie du panneau solaire associé (10, 11, 12), ledit contact domestique est configuré pour être connecté audit contact central lorsque le relais (S1) est à l'état hors tension, dans lequel le relais (S1) est configuré pour passer à l'état tiré ou à l'état de fonctionnement dès que le panneau solaire associé non éclairé reçoit une irradiation, et
- les premier et second ports de sortie (25, 26) des dispositifs d'amplification de la tension (14, 15, 16) sont connectés en série et sont configurés pour fournir au moins ladite tension d'entrée minimale à l'onduleur CC-CA commun (17).

2. Système selon la revendication 1, **dans lequel** le générateur de signal réglable (23) présente un port de réinitialisation (4), et le générateur de signal réglable (23) est configuré pour changer la fréquence et/ou le rapport cyclique des impulsions générées en appliquant une tension de commande audit port d'entrée de commande (6, 7).

3. Système selon la revendication 2, **dans lequel** le système comprend en outre une unité centrale (35) comprenant une mémoire et un processeur programmé, et des coupleurs optiques (40, 41, 42) avec une entrée et des sorties respectives, l'unité centrale (35) présente des sorties de commande de tension respectives (a, b,....n) couplées à l'entrée desdits coupleurs optiques (40, 41, 42) et à la masse (G), et entre l'entrée de chaque coupleur optique (40, 41 ; 42) et la masse (G) est connecté un diviseur de tension respectif, dans lequel chaque diviseur de tension comporte une résistance et une diode Zener connectée en série (Z1, Z2, Z3),
- les sorties des coupleurs optiques (40, 41, 42) sont connectées audit port d'entrée de commande (6) et au port de mise à la terre interne (1) d'un générateur de signal réglable associé (23) dans lesdits dispositifs d'amplification de la tension (14, 15, 16), dans lequel la tension de coupure desdites diodes Zener (Z1, Z2, Z3) est configurée pour limiter la fréquence la plus élevée réglable du générateur de signal réglable associé (23), et les diodes Zener (Z1, Z2, Z3) associées à un dispositif d'amplification de la tension (14, 15, 16) présentent des tensions de coupure progressivement différentes, et l'unité centrale (35) est configurée pour définir laquelle des sorties de commande (a, b, c....n) est alimentée pour définir ainsi la fréquence maximale des impulsions du dispositif d'amplification de la tension associé (14, 15, 16).

4. Système selon la revendication 3, **dans lequel** il comprend en outre un autre coupleur optique (43) avec une sortie connectée au port de réinitialisation (4) du générateur de signal réglable (23) dans lesdits dispositifs d'amplification de la tension (14, 15, 16), ledit autre coupleur optique (43) présente une entrée connectée à ladite unité centrale (35) qui est configurée pour arrêter le fonctionnement du générateur de signal réglable associé (23) et pour terminer l'excitation dudit relais associé (S1) lorsque certaines conditions d'utilisateurs s'appliquent.

5. Système selon la revendication 4, **dans lequel** le système comprend un dispositif de communication gsm (36) connecté à l'unité centrale (35), et ledit dispositif de communication gsm (36) est configuré pour être en connexion avec un téléphone mobile (37), et/ou un ordinateur (38) ou une tablette et configuré pour permettre à un utilisateur suite à l'utilisation d'un programme d'application approprié et d'un contrôle d'identité l'inspection et/ou le contrôle du système.
